# EUROPÄISCHE PATENTSCHRIFT

(11) **EP 3 510 584 B1**
(45) Veröffentlichungstag und Bekanntmachung des Hinweises auf die Patenterteilung: **09.04.2025**
(21) Anmeldenummer: 17758093.3
(22) Anmeldetag: 14.08.2017
(51) Int. Cl.: G08G 1/16, G08G 1/14, G05D 1/00

(54) **SYSTEM UND VERFAHREN ZUM OPERIEREN VON NUTZFAHRZEUGEN**
SYSTEM AND METHOD FOR OPERATING UTILITY VEHICLES
SYSTÈME ET DISPOSITIF POUR FAIRE FONCTIONNER DES VÉHICULES UTILITAIRES

(30) Priorität: 08.09.2016 DE 102016116857
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: BALOGH, Levente, 2310 Szigetszentmiklós (HU); HORVATH, Csaba, 2051 Biatorbagy (HU); NEMETH, Huba, 1116 Budapest (HU); TIHANYI, Viktor, 1032 Budapest (HU); FRANK, Peter, 1112 Budapest (HU)
(86) Internationale Anmeldenummer: PCT/EP2017/070641
(87) Internationale Veröffentlichungsnummer: WO 2018/046252

(56) Entgegenhaltungen:
- EP-A1- 2 910 453
- EP-A2- 1 480 097
- DE-A1- 102014 224 113
- DE-A1- 102014 224 124

## Beschreibung

Die vorliegende Erfindung bezieht sich auf ein System und auf ein Verfahren zum Operieren von fahrerlosen Nutzfahrzeugen, und insbesondere auf ein autonomes Operieren von Nutzfahrzeugen in einem eingeschränkten Bereich.

Bei dem Einsatz von Nutzfahrzeugen sind die Transportzeit und die Ausnutzung der Arbeitszeit des Fahrers signifikante Faktoren für die Effektivität einer Fahrzeugflotte. Ein Hauptteil des Transportes geschieht typischerweise auf öffentlichen Straßen mit standardisierten Regeln, die häufig keine hohen Anforderungen an den Fahrer darstellen. Probleme können jedoch auftreten, wenn das Nutzfahrzeug in spezielle Bereiche genutzt wird, wo die Umgebung einzigartig, der Raum begrenzt und spezifische Manöver auszuführen sind, die häufig hohe Anforderungen an den Fahrer stellen. Solche speziellen Bereiche sind beispielsweise Verladestationen oder Güterhöfe, die häufig keinen ausreichenden Platz bieten und trotzdem ein Manövrieren des Fahrers in verschiedenen Richtungen erfordern.

Viel Zeit geht insbesondere dann verloren, wenn der Fahrer spezielle, nicht standardisierte Manöver innerhalb von Bereichen auszuführen hat, mit denen er nicht vertraut ist und die besondere Schwierigkeiten darstellen. Gerade weil sich der Fahrer in solchen Situationen häufig unsicher fühlt, ist die Wahrscheinlichkeit von Unfällen erhöht. Beispielsweise treten Unfälle gehäuft auf, wenn der Fahrer in unübersichtlichem Gebiet ein Nutzfahrzeug rückwärts in einen engen Bereich einfahren muss.

Auch wenn äußere Störeinflüsse in solchen Gebieten/Bereichen und die Geschwindigkeit des Nutzfahrzeuges eher gering sind, bieten bekannte Systeme hierfür nur unzureichende Lösungen. So ist in DE 10 2014 221 777 A1 eine Vorrichtung offenbart, die ein Fahrzeug basierend auf einer digitalen Karte an einer bestimmten Position auf dem Parkplatz abstellt und ausschaltet. In DE 10 2014 011 796 A1 ist ein weiteres System zum autonomen Navigieren von Fahrzeugen offenbart, wo das Fahrzeug von einer Anfangsposition zu einem Ziel entlang eines berechneten Pfades bewegt wird. In EP 2 910 453 A1 wird ein weiteres autonomes Fahrzeugsystem offenbart, wo das Fahrzeug Markierungen innerhalb eines Parkhauses oder eines Parkgebietes folgt, um ein Parken des Fahrzeuges zu ermöglichen. In EP 2 136 275 A1 wird ein System offenbart, welches automatisch ein Fahrzeug entlang eines Pfades leitet, und zwar innerhalb eines Gebietes. In EP 1 480 097 A2 wird ein automatisierter Speditionshof und in der DE 10 2014 224 113 A1 wird ein Parkplatzverwaltungsserver für einen Parkplatz offenbart.

Diese Systeme sind jedoch unvollständig, da der Fahrer entweder immer noch die Verantwortung über das Fahrzeug behält oder aber das System nur relativ einfache Steuerungen des Fahrzeugs übernimmt (d.h. als aktives Navigationssystem agiert). Außerdem befassen sich diese Dokumente mit typischen Anwendungen für Personkraftfahrzeuge. Für Nutzfahrzeuge hat eine Parkplatzsuche nicht eine solche Bedeutung wie für PKWs. Stattdessen ist es für Nutzfahrzeuge häufig wichtig, spezielle Handlungen an dem Fahrzeug auszuführen, wie beispielsweise ein Beladen oder Entladen, eine Wartung, eine Betankung, eine Säuberung des Fahrzeuges oder auch Befahren von anderen Transportmittel (z.B. auf einen Zug auffahren). Für diese Anwendungsfälle offenbaren die genannten Dokumente keine Lösungen.

Daher besteht ein Bedarf nach weiteren automatisierten oder halbautomatisierten Operationen, die innerhalb von Bereichen ohne Interaktion mit einem Fahrer ausgeführt werden können.

Zumindest ein Teil der obengenannten Probleme wird durch ein System zum Operieren eines fahrerlosen Nutzfahrzeugs nach Anspruch 1, ein dazugehöriges Verfahren nach Anspruch 11 und ein Computerprogrammprodukt nach Anspruch 12 gelöst. Die abhängigen Ansprüche definieren weitere vorteilhafte Ausführungsformen.

Die vorliegende Erfindung bezieht sich auf ein System zum Operieren eines fahrerlosen Nutzfahrzeugs in einem eingeschränkten Bereich. Der eingeschränkte Bereich umfasst eine Einfahrt, eine Ausfahrt und einen vorbestimmten Zielpunkt. Das System umfasst ein Übergabemodul, ein Bewegungsmodul und ein Durchführungsmodul. Das Übergabemodul ist ausgebildet, um die Kontrolle über das Nutzfahrzeug an der Einfahrt von dem Fahrer des Nutzfahrzeuges an das System und an der Ausfahrt von dem System an den Fahrer des Nutzfahrzeuges zu übergeben. Das Bewegungsmodul ist ausgebildet, um das Nutzfahrzeug von der Einfahrt zu dem vorbestimmten Zielpunkt und von dem vorbestimmten Zielpunkt zu der Ausfahrt autonom, insbesondere fahrerlos, zu bewegen. Das Durchführungsmodul ist ausgebildet, um eine Handlung an dem Nutzfahrzeug autonom durchzuführen, während das Nutzfahrzeug sich an dem vorbestimmten Zielpunkt befindet, um einen Zustand des Nutzfahrzeuges durch die Handlung zu ändern.

Unter einem eingeschränkten Bereich soll im Rahmen der vorliegenden Erfindung alle Bereiche umfasst sein, in denen eine Regulierung derart vorliegt, dass beispielsweise eine Zugangskontrolle (z.B. für Personen) durchgeführt wird und eine Beschränkung hinsichtlich von Fahrzeugbewegungen vorliegt. Unter einem eingeschränkten Bereich sollen somit insbesondere Bereiche umfasst sein wie beispielsweise Verladehöfe, Be- und Entladestationen, Fähren, Flugzeuge, Schiffe, Eisenbahntransportmittel und anderes mehr. Optional können die Einfahrt und die Ausfahrt sich an einem gleichen Ort befinden bzw. nur verschieden Fahrbahnen einer Zufahrt darstellen.

Der Begriff "autonom" soll so verstanden werden, dass die dadurch gekennzeichnete Tätigkeit ohne menschlichen Zutun ausgeführt werden kann. Insbesondere braucht zur Ausführung keine Person anwesend zu sein - auch nicht zur Überwachung. Außerdem soll der Begriff "Operieren" breit ausgelegt werden und darunter nicht nur ein Bewegen des Nutzfahrzeuges verstanden werden, sondern ein Betätigen von beliebigen Aktuatoren des Nutzfahrzeuges mit umfassen. Dazu gehören beispielsweise eine Höheneinstellung (z.B. einer Ladefläche), eine Betätigung von Ladeklappen, ein Koppeln/Entkoppeln eines Trailers, Betätigung einer Bremseinrichtung, Starten/Ausschalten von Maschinen, etc.

Es versteht sich, dass die im Rahmen der vorliegenden Erfindung definierten Module insbesondere auch durch Software in einer Steuereinheit des Nutzfahrzeuges oder eines anderen Systems implementiert sein können, so dass die Steuereinheit des Nutzfahrzeuges die beschriebenen Funktionen bereitstellen kann.

Optional kann das Durchführungsmodul ausgebildet sein, um die Handlung autonom durchzuführen, d.h. ohne eine Interaktion mit dem Fahrer des Nutzfahrzeuges oder einer anderen Person.

Optional ist das Durchführungsmodul weiter ausgebildet ist, um durch die Handlung zumindest einen der folgenden Zustände des Nutzfahrzeuges zu ändern: einen Energieladezustand, einen Beladungszustand, ein Koppeln oder Entkoppeln von Fahrzeugteilen, eine globale Position des Fahrzeuges, eine Verschmutzung der äußeren Oberfläche des Fahrzeuges, einen Servicezustand des Fahrzeuges oder einer seiner Komponenten.

Optional ist/sind das Bewegungsmodul und/oder das Durchführungsmodul ausgebildet, um das Nutzfahrzeug autonom zu bewegen und/oder um die Handlung nur dann autonom durchzuführen, wenn der Fahrer das Nutzfahrzeug verlassen hat (nicht mehr in der Fahrerkabine ist).

Das Nutzfahrzeug weist eine Sensoreinheit und Fahrzeugaktuatoren zum Operieren des Nutzfahrzeuges auf. Das Bewegungsmodul ist ausgebildet, um Sensordaten von der Sensoreinheit zu erhalten und um die Fahrzeugaktuatoren basierend auf den Sensordaten anzusteuern, um das Nutzfahrzeug autonom zu operieren.

Die Sensoreinheit weist Umgebungssensoren auf und das Bewegungsmodul ist ausgebildet, um Hindernisse während des autonomen Bewegens unter Nutzung der Umgebungssensoren zu erkennen und basierend darauf einen Bewegungspfad von der Einfahrt zu dem vorbestimmten Zielpunkt oder von dem vorbestimmten Zielpunkt zu der Ausfahrt zu ändern, um einen Alternativpfad zu nutzen oder eine Bewegung zu unterbrechen.

Das System weist ein Hilfemodul auf, welches ausgebildet ist, um Unterstützung bei einem Bediener des Systems anzufragen, wenn das Bewegungsmodul nicht in der Lage ist, einen alternativen Pfad oder eine Unterbrechung der Bewegung durchzuführen.

Die Sensoreinheit kann einen Positionssensor und einen Sensor zur Bestimmung der Orientierung des Nutzfahrzeuges umfassen und das Bewegungsmodul kann optional ausgebildet sein, um das Nutzfahrzeug an dem vorbestimmten Zielpunkt mit einer definierten Orientierung zu parken.

Der eingeschränkte Bereich kann durch ein Managementsystem steuerbar sein und das Managementsystem kann ausgebildet sein, um eine Planung von Pfaden von Fahrzeugen in dem eingeschränkten Bereich durchzuführen. In diesem Fall kann das System optional eine Kommunikationsschnittstelle aufweisen, die ausgebildet ist, um eine Verbindung zu dem Managementsystem des eingeschränkten Bereiches herzustellen, um Daten für einen geplanten Pfad in dem eingeschränkten Bereich zu erhalten. Der Zugriff auf das Managementsystem kann dabei insbesondere über ein Funkmodul geschehen, welches sich bereits in dem Fahrzeug befindet bzw. als Teil der Kommunikationsschnittstelle ausgebildet ist.

Optional ist das Bewegungsmodul ausgebildet, um das Nutzfahrzeug autonom zu den weiteren Zielpunkten innerhalb des eingeschränkten Bereiches entlang des geplanten Pfades zu bewegen, um an den weiteren Zielpunkten weitere Handlungen auszuführen oder zweitweise das Nutzfahrzeug zu parken. Außerdem kann die Kommunikationsschnittstelle ausgebildet sein, um Informationen über Handlungen an den weiteren Zielpunkten zu erhalten.

Optional kann das Bewegungsmodul weiter ausgebildet sein, um Zielpunkte für das Nutzfahrzeug basierend auf Informationen zu ermitteln, die von Handlungen abhängen, die der Fahrer des Nutzfahrzeuges oder die ein Fahrer von anderen Fahrzeugen zuvor durchgeführt hatten. Beispielsweise kann das Nutzfahrzeug derart autonom gesteuert werden, dass es einer Route folgt (einschließlich potentieller Wartepunkte) die zuvor ein anderes Fahrzeug genommen hat oder aber der Fahrer selbst mit dem Nutzfahrzeug gefahren ist (z.B. zum Lernen).

Optional umfasst das System ein Hinweisemodul, welches ausgebildet ist, um die autonom ausgeführten Handlungen in dem eingeschränkten Bereich zu visualisieren und/oder akustisch anzuzeigen, sodass eine Umgebung des Nutzfahrzeuges Hinweise über die autonom ausgeführten Handlungen erhält.

Die vorliegende Erfindung bezieht sich auch auf ein Managementsystem mit einer Kommunikationsschnitte und einer Steuereinheit. Die Kommunikationsschnittstelle ist ausgebildet, um eine Kommunikationsverbindung mit einem System, wie es zuvor beschrieben wurde, herzustellen. Die Steuereinheit ist ausgebildet, um eine Planung und Koordinierung von einem autonom fahrenden Nutzfahrzeug in dem eingeschränkten Bereich durchzuführen.

Die vorliegende Erfindung bezieht sich auch auf ein Verfahren zum Operieren eines fahrerlosen Nutzfahrzeugs in dem genannten eingeschränkten Bereich gemäß dem unabhängigen Anspruch 11.

Dieses Verfahren kann ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor (z.B. eine der Fahrzeugsteuereinheiten) läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweisen, der einen Software-Code ausführen kann.

Zumindest ein Teil der oben genannten technischen Probleme wird somit durch ein System gemäß Ausführungsbeispielen dadurch gelöst, dass der Fahrer das Nutzfahrzeug an das System übergibt, so dass das fahrerlose Nutzfahrzeug in dem eingeschränkten Bereich durch ein System operiert wird. Dadurch werden Arbeitszeiten (Fahrzeiten) des Fahrers eingespart und das Nutzfahrzeug wird effizient genutzt.

Im Vergleich zu bekannten Systemen, bieten Ausführungsbeispiele die folgenden Vorteile:
Unfallrisiken verringern sich beträchtlich, da der Fahrer durch das System ersetzt wird, welches autonom das Fahrzeug innerhalb des eingeschränkten Bereiches übernimmt und gleichzeitig eine vorbestimmte Handlung an dem Fahrzeug ausführt. Der Fahrer ist vollkommen entkoppelt von einer Interaktion mit dem Nutzfahrzeug. Insbesondere braucht der Fahrer das Beladen oder Entladen oder die Wartung oder Betankung des Fahrzeuges nicht zu überwachen. Diese Tätigkeiten werden automatisch durch das System ausgeführt, sodass der Fahrer in dem Fahrzeug nicht verfügbar sein braucht. Da die autonomen Operationen in einem eingeschränkten Bereich ausgeführt werden und somit Personen der Zutritt verwehrt werden kann oder nur einen limitierten Zugang haben, wird ebenfalls ein hohes Maß an Sicherheit durch Ausführungsbeispiele sichergestellt.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt ein Ausführungsbeispiel für ein System zum Operieren eines Nutzfahrzeugs ohne einen Fahrer in einem eingeschränkten Bereich.
- Fig. 2: zeigt ein Fahrzeug, wie es in Ausführungsbeispielen genutzt werden kann.
- Fig. 3: zeigt einen beispielhaften eingeschränkten Bereich.
- Fig. 4: veranschaulicht mögliche Manöver, die durch ein Nutzfahrzeug in dem eingeschränkten Bereich auszuführen sind.
- Fig. 5: zeigt ein Flussdiagramm für ein Verfahren, welches von dem System gemäß Ausführungsbeispielen ausgeführt wird.

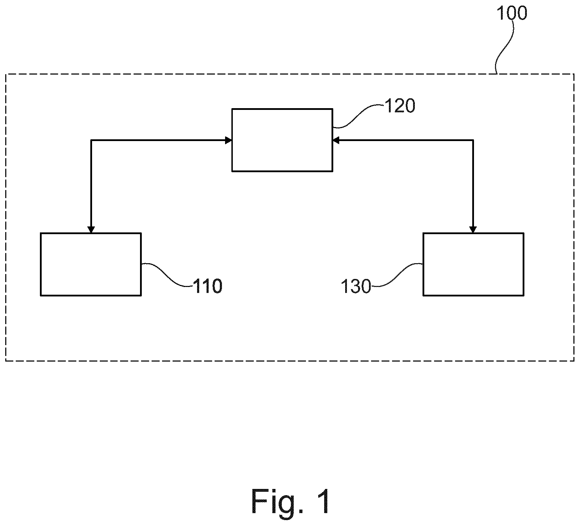

**Fig. 1** zeigt ein Ausführungsbeispiel für ein System 100, das geeignet ist zum Operieren eines Nutzfahrzeugs in einem eingeschränkten Bereich, ohne dass ein Fahrer in dem Nutzfahrzeug vorhanden sein muss. Der eingeschränkte Bereich umfasst eine Einfahrt, eine Ausfahrt und einen vorbestimmten Zielpunkt aufweist. Das System 100 umfasst ein Übergabemodul 110, ein Bewegungsmodul 120 und ein Durchführungsmodul 130. Das Übergabemodul 110 ist ausgebildet, um die Kontrolle über das Nutzfahrzeug zu übergeben, und zwar an der Einfahrt : von dem Fahrer des Nutzfahrzeuges an das System, und an der Ausfahrt : von dem System an den Fahrer des Nutzfahrzeuges. Das Bewegungsmodul 120 ist ausgebildet, um das Nutzfahrzeug von der Einfahrt zu dem vorbestimmten Zielpunkt 201 und von dem vorbestimmten Zielpunkt zu der Ausfahrt autonom zu bewegen. Das Durchführungsmodul 130 ist ausgebildet, um eine Handlung an dem Nutzfahrzeug autonom durchzuführen, während das Nutzfahrzeug sich an dem vorbestimmten Zielpunkt befindet. Durch die Handlung wird ein Zustand des Nutzfahrzeuges geändert.

Daher ist das System in der Lage, das Nutzfahrzeug innerhalb des Bereiches zu bewegen und Positionswechsel autonom durchzuführen. Insbesondere ist es möglich, dass ein oder mehrere Zielpunkte innerhalb des Bereiches in einer bestimmten Reihenfolge abgefahren werden. An dem vorbestimmten Zielpunkt kann ein Managementsystem des eingeschränkten Bereiches bestimmte Änderungen an dem Fahrzeug während des Aufenthaltes durchführen. Eine typische Handlung ist beispielsweise eine Be- oder Entladung, aber auch eine Reinigung oder Wartung des Nutzfahrzeuges oder ein Betanken oder Aufladen von Batterein (oder Änderung eines allgemeinen Energieladezustandes) oder eine beliebige Kombination daraus.

Das System 100 kann ganz oder teilweise durch Software implementiert sein, die in einer Steuereinheit des Nutzfahrzeuges oder in einem anderen System installiert ist, um die beschriebenen Funktionen auszuführen. Das andere System kann insbesondere außerhalb des Nutzfahrzeuges sein (z.B. Teil des Managementsystem sein).

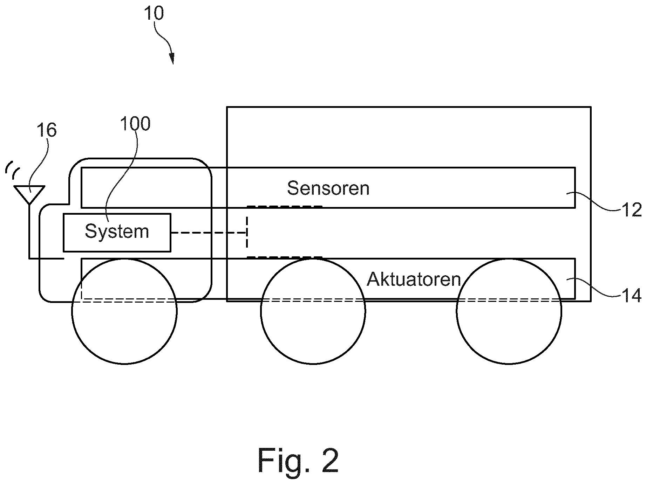

**Fig. 2** zeigt ein Ausführungsbeispiel für ein Fahrzeug 10, insbesondere ein Nutzfahrzeug, welches genutzt werden kann, um innerhalb des eingeschränkten Bereiches autonom betrieben zu werden. Das Nutzfahrzeug 10 umfasst das System 100, welches beispielsweise innerhalb eines Steuergerätes des Fahrzeuges 10 installiert sein kann oder als separate Hardware in dem Fahrzeug 10 untergebracht sein kann.

Das Nutzfahrzeug 10 umfasst weiter zumindest eine Sensoreinheit 12, die ausgebildet ist, um ein Umfeld des Fahrzeuges 10 zu erfassen (zum Beispiel um Entfernungen zu anderen Objekten zu ermitteln oder um Bewegungsänderungen oder Geschwindigkeitsänderungen zu erfassen). Das Nutzfahrzeug 10 umfasst weiter eine Vielzahl von Fahrzeugaktuatoren 14, die beispielsweise ausgebildet sind, um das Fahrzeug 10 entlang eines Pfades zu steuern. Hierzu gehören insbesondere Lenk- und Bremsaktuatoren, die das Fahrzeug 10 lenken oder abbremsen. Ebenso gehören dazu Fahrzeugaktuatoren 14, die eine Beschleunigung des Fahrzeugs 10 bewirken können. Optional umfasst das Fahrzeug ein eigenes Kommunikationsmodul 16, welches eine Funkverbindung zu einem externen Netzwerk herstellen kann. Das System 100 kann beispielsweise ausgebildet sein, um das Kommunikationsmodul 16 des Fahrzeuges 10 zu nutzen, um Daten von dem externen Netzwerk zu erhalten oder dorthin zu senden. Außerdem kann das Kommunikationsmodul 16 genutzt werden, um das Nutzfahrzeug 10 mit einem Managementsystem des eingeschränkten Bereiches zu verbinden und von dort Daten für einen zu fahrenden Pfad zu erhalten.

Das Nutzfahrzeug 10 kann beispielsweise ein Bus, ein Lastkraftwagen, eine Zugmaschine für einen Trailer oder eine Kombination von mehreren Fahrzeugteilen umfassen (einschließlich eines Anhängers).

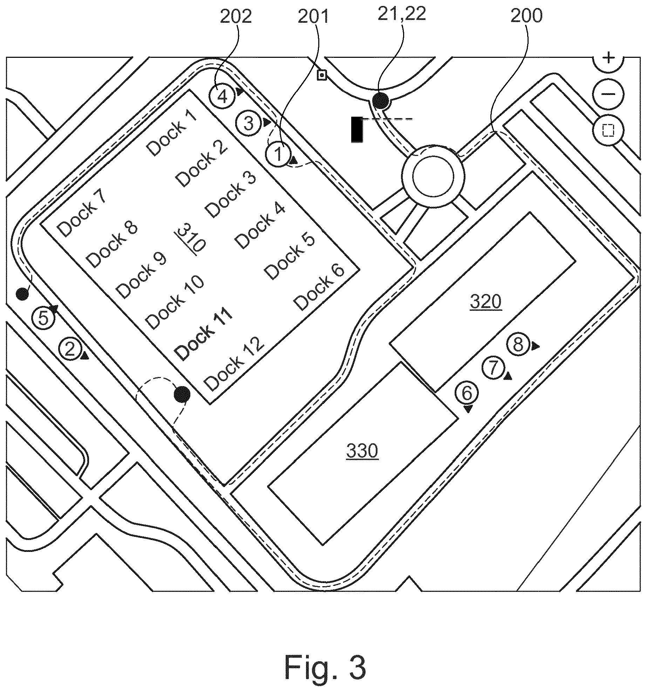

**Fig. 3** zeigt einen beispielhaften eingeschränkten Bereich, der eine Einfahrt 21 aufweist. An der Einfahrt 21 kann eine Zugangskontrolle vorgesehen sein, sodass sichergestellt ist, dass auf dem eingeschränkten Bereich nur das Nutzfahrzeuge 10 oder Fahrzeuge unterwegs sind, die den Anforderungen des eingeschränkten Bereiches genügen. Das Nutzfahrzeug 10 kann beispielsweise ein Fahrzeug sein, wie es in der Fig. 2 gezeigt ist.

Der gezeigte eingeschränkte Bereich kann über ein Managementsystem verwaltet werden. Das Managementsystem kann beispielsweise ausgebildet sein, um für ein Nutzfahrzeug 10, welches sich an der Einfahrt 21 entsprechend anmeldet, einen Pfad 200 zu bestimmen, den das Nutzfahrzeug 10 dann autonom abfahren kann. Dieses Managementsystem kann insbesondere die Punkte und die Reihenfolge definieren, in welcher die Punkte abzufahren sind. Außerdem kann das Managementsystem eine Pfadspezifikation für die Reihe von Wegpunkten bereitstellen (an welchen Positionen z.B. wie abzubiegen ist). Optional ist es ebenfalls möglich, dass das Managementsystem Daten liefert, die als Randbedingungen zum Planen eines Pfades entlang der Reihe von Wegpunkten zu beachten sind.

Der Pfad 200 führt beispielsweise an verschiedenen Gebäuden 310, 320, 330 vorbei, die beispielsweise durch die Sensoreinheit 12 des Nutzfahrzeuges 10 mit einer Umfeldsensorik erfasst werden können. Der Pfad 200 führt dann beispielhaft zu zwei vorbestimmte Zielpunkte 201, 202, die beispielsweise Andockstationen an einem Lagergebäude 310 sind, wo das Nutzfahrzeug 10 andockt und beispielsweise Be- und Entladetätigkeit durchführt. Potentiele weitere Zielpunkte sind die Stationen "1", "2", ... , "8", an denen optional weitere Handlungen durchführbar sind (z.B. in Abhängigkeit von der Art des Nutzfahrzeuges). Es versteht sich, dass im Rahmen der vorliegenden Erfindung noch weitere Zwischenpunkte definiert werden können, wo keine Handlungen an dem Fahrzeug 10 ausgeführt werden, sondern das Fahrzeug beispielsweise in einer Parkposition abwartet. Das Parken kann dabei lediglich zeitweise oder auch für einen längeren Zeitraum geschehen.

Das Managementsystem des eingeschränkten Bereiches kann außerdem die Handlungen planen und/oder steuern, die an dem Fahrzeug 10 an den unterschiedlichen Zielpunkten 201, 202 oder den weiteren Stationen innerhalb des Bereiches auszuführen sind. Dazu kann das Bewegungsmodul 120 Planungsdaten von dem Managementsystem erhalten und das Fahrzeug 10 autonom zu den unterschiedlichen Zielpunkten navigieren. Nachdem alle geplanten Handlungen abgeschlossen sind, kann das Bewegungsmodul 120 das Fahrzeug 10 autonom zu der Ausfahrt 22 navigieren. Die Ausfahrt 22 kann der gleiche Punkt sein wie die Einfahrt 21, wo der Fahrer des Fahrzeuges 10 unter Nutzung des Übergabemoduls 110 die Kontrolle über das Fahrzeug 10 zurück übernehmen kann und manuell fahrend das Fahrzeug 10 aus dem eingeschränkten Bereich herausfährt.

Das System 100 kann ebenfalls Schnittstellen zu der Fahrzeugsensoreinheit 12 und zu den Fahrzeugaktuatoren 14 umfassen, um einen Zustand des Fahrzeuges 10 und der Umgebung festzustellen (z.B. Detektion der Gebäude 320, 330, 310 oder eine relative Orientierung dazu) und um basierend darauf eine Steuerung des Fahrzeugzustandes durchzuführen, und zwar ohne dass dazu eine Hilfe des Fahrers notwendig wäre. Dies kann beispielsweise eine Schnittstelle zu dem Managementsystem des eingeschränkten Bereiches sein, so dass das Managementsystem Zugang zu dem Fahrzeug 10 behält auf Komponenten des Fahrzeuges zugreifen kann. Diese Schnittstelle kann beispielsweise eine drahtlose Kommunikation erlauben.

Der gezeigte eingeschränkte Bereich kann beispielsweise durch einen Betreiber oder Operator verwaltet werden. Der Betreiber oder Operator kann insbesondere das Managementsystem sein oder umfassen, welches ausgebildet ist, um einen automatisierten Betrieb für den eingeschränkten Bereich sicherzustellen. Das Managementsystem kann aber optional ebenso durch eine Person bedient oder zumindest teilweise gesteuert oder überwacht werden, um so die Sicherheit auf dem eingeschränkten Bereich zu gewährleisten.

Gemäß weiteren Ausführungsbeispielen ist es ebenfalls möglich, eine Fahrt zwischen den Zielpunkten derart zu definieren, dass ein zuvor aufgenommener Pfad wiederholt wird. Beispielsweise kann ursprünglich durch den Fahrer manuell einen Pfad abgefahren werden und Bewegungsdaten erfasst werden. Das Bewegungsmodul 120 ist dann beispielweise ausgebildet, um basierend auf den Bewegungsdaten das Nutzfahrzeug 10 autonom entlang des aufgenommen Pfades fahren zu lassen.

Der gezeigte eingeschränkte Bereich stellt lediglich ein Beispiel dar. Das System 100 ist aber insbesondere auch für Bereiche einsetzbar, wo eine hohe Genauigkeit hinsichtlich der Navigation des Fahrzeuges 10 innerhalb kurzer Zeit erforderlich ist und wo es häufig zu Schäden bei einer manuellen Operation der Nutzfahrzeuge 10 kommt. Gerade in solchen Bereichen stellt das System 100 ein sicheres Operieren des Nutzfahrzeuges 10 sicher. Beispielsweise sind dies andere Transportfahrzeug (eine Fähre, eine Eisenbahn, ein Flugzeug, ein Straßenlastzug, etc.), auf denen das Nutzfahrzeug 10 mit hoher Präzession abgestellt werden soll. In diesem Fall ist die Bewegung des Nutzfahrzeuges 10 (Änderung seiner globalen Position zusammen mit dem Transportfahrzeug) die Handlung, die in dem eingeschränkten Bereich durchgeführt wird. Das Nutzfahrzeug 10 kann also auch einen Festpunkt relativ zu dem Bereich während der Handlung einnehmen und der eingeschränkte Bereich (z.B. der Innenraum eines Flugzeuges) bewegt sich.

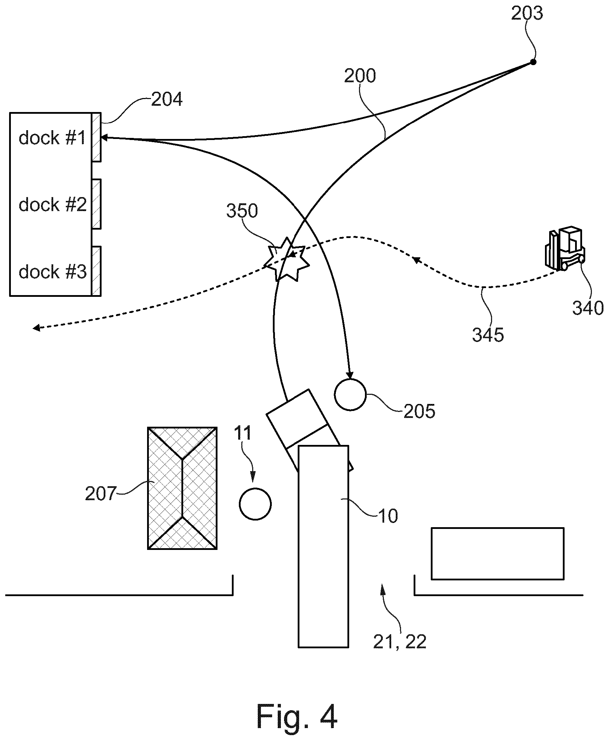

**Fig. 4** veranschaulicht mögliche Manöver, die durch ein Nutzfahrzeug 10 auf/in dem eingeschränkten Bereich auszuführen sind. Zunächst meldet sich das Fahrzeug 10 bei der Einfahrt 21 bei dem Betreiber/Managementsystem 207 an. Dabei kann eine Übergabe des Fahrzeuges 10 an das System 100 erfolgen, welches sich bei dem Managementsystem für den eingeschränkten Bereich anmeldet. Nachdem das Nutzfahrzeug 10 übergeben wurde, kann der Fahrer 11 das Nutzfahrzeug 10 verlassen. Daraufhin kann das Nutzfahrzeug 10 autonom innerhalb des eingeschränkten Bereiches operiert werden.

Beispielhaft ist in der Fig. 4 eine Situation gezeigt, wo an einer Position 350 das Nutzfahrzeug 10 mit einem Gabelstapler 340 potenziell zusammenstoßen kann. Diese Situation kann durch das System 100 dadurch bewältigt werden, dass das Nutzfahrzeug 10 zunächst in einer Warteposition solange wartet, bis der Gabelstapler 340 seinen Pfad 345 absolviert hat. Daraufhin kann das System 100 das Nutzfahrzeug 10 entlang des Pfades 200 weiter zu einer Wendeposition 203 bewegen. An der Wendeposition 203 wird die Bewegungsrichtung des Nutzfahrzeuges 10 umgekehrt und es erfolgt eine rückwärtige Andockung an eine Dockstation 1 eines Gebäudes (Position 204). An dieser Position 204 kann beispielsweise eine Beladung des Nutzfahrzeuges 10 erfolgen.

Das System 100 kann danach über das Managementsystem entsprechende Information erhalten, wie lange das Nutzfahrzeug 10 an der Position 204 abwarten soll. Nach Freigabe durch das Managementsystem 200 kann das System 100 die Bewegung von der Position 204 fortsetzen. Dies kann beispielsweise dadurch geschehen, dass das Managementsystem dem System 100 bestätigt, dass die Beladeaktivität an der Andockstation 204 abgeschlossen ist und die Bewegung fortgesetzt werden kann. Daraufhin kann das System 100 das Nutzfahrzeug 10 autonom von der Andockstation 204 hin zu einer Parkposition 205 (oder Endpunkt) an der Ausfahrt 22 weiterführen. An der Ausfahrt 22 kann der Fahrer wiederum das Nutzfahrzeug 10 in Empfang nehmen und manuell fahren.

Fig. 4 veranschaulicht somit eine typische Bewegungsumkehr des Nutzfahrzeuges 10, die bei unübersichtlichen Verladehöfen ein großes Unfallrisiko darstellt, wenn das Nutzfahrzeug 10 manuell betrieben wird und der Fahrer den Verladehof nicht genau kennt. Aus diesem Grund ist das System 100 insbesondere für derartige Situationen vorteilhaft einsetzbar.

Es versteht sich, dass es erforderlich sein kann, die Position und Orientierung des Nutzfahrzeuges 10 möglichst genau zu bestimmen und zu überwachen, um so die Handlungen an den Punkten innerhalb des Bereiches effizient auszuführen. Aus diesem Grund kann durch das Managementsystem des eingeschränkten Bereiches beispielsweise eine genaue Positionsbestimmung durch das Nutzfahrzeug 10 gefordert werden, d.h. für eine erfolgreiche Übernahme kann es erforderlich sein, dass das Nutzfahrzeug 10 ausreichend genaue und zuverlässige Sensoren zur Ortsbestimmung aufweist (z.B. Entfernungsmesser, Radaranlagen, Kamerase, Ultraschallsensoren, etc.).

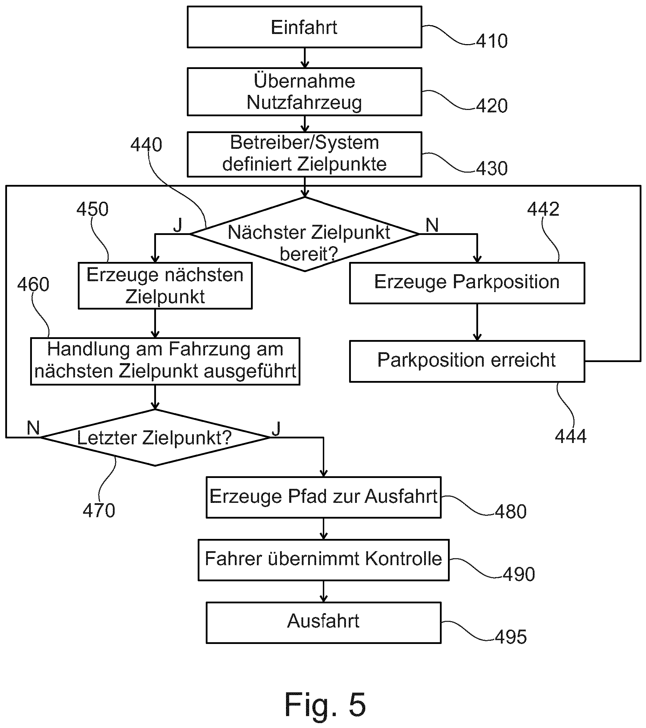

**Fig. 5** zeigt ein Flussdiagramm für ein Verfahren, welches beispielsweise von dem System 100 ausgeführt werden kann, wobei hier das System zumindest teilweise in dem Managementsystem für den eingeschränkten Bereich integriert ist.

Beim Schritt 410 erfolgt die Einfahrt in den eingeschränkten Bereich. Bei dem Schritt 420 erfolgt die Übernahme des Nutzfahrzeuges 10 an den Betreiber (oder das Managementsystem), der den eingeschränkten Bereich unter Nutzung des Managementsystems betreibt. Beim Schritt 430 definiert das Managementsystem Zielpunkte, die von dem Nutzfahrzeug 10 anzufahren sind. Hierbei kann insbesondere das Managementsystem weitere Informationen über den Pfad 200 hin zu den definierten Zielpunkten übergeben.

Bei dem Schritt 440 wird festgestellt, ob ein Zielpunkt, der als erstes bzw. als nächstes anzufahren ist, bereit ist, das Nutzfahrzeug 10 zu übernehmen. Falls dies der Fall ist, wird beim Schritt 450 der Pfad zu dem nächsten Zielpunkt erzeugt und beim Schritt 460 wird der nächste Zielpunkt erreicht und die Handlung an dem Nutzfahrzeug 10 ausgeführt. Wenn dies geschehen ist, wird bei dem Schritt 470 zunächst nachgefragt, ob der Zielpunkt ein letzter Zielpunkt ist. Wenn dies der Fall ist, erzeugt das Managementsystem einen Pfad zur Ausfahrt im Schritt 480. Beim Schritt 490 empfängt der Fahrer das Nutzfahrzeug 10 und übernimmt die Kontrolle über das Nutzfahrzeug 10. Und beim Schritt 495 fährt der Fahrer manuell das Fahrzeug 10 aus dem eingeschränkten Bereich heraus.

Falls bei der Abfrage 440 der erste oder nächste Zielpunkt noch nicht bereit sein sollte, das Nutzfahrzeug 10 zu übernehmen, wird bei dem Schritt 442 das Nutzfahrzeug 10 zu einer Parkposition geführt, wozu ein entsprechender Pfad hin zur Parkposition erzeugt wird. Daraufhin fährt das Fahrzeug beim Schritt 444 zu der Parkposition und wartet dort ab, bis eine Bestätigung erfolgt, dass der nächste Zielpunkt angefahren werden kann. Wenn dies der Fall ist, folgt das Nutzfahrzeug 10 dem zuvor ermittelten Pfad (Schritt 450).

Falls das System 100 feststellt, dass der Zielpunkt, der beim Schritt 460 angefahren wurde, und die Handlung, die dort ausgeführt wurde, noch nicht der letzte Zielpunkt in dem eingeschränkten Bereich ist, erfolgt eine erneute Abfrage, ob der nächste Zielpunkt zur Übernahme des Nutzfahrzeuges 10 bereit ist. Dies geschiegt im Schritt 440. Falls dies der Fall ist, folgt das Verfahren mit den Schritten 450 und 460, und falls dies nicht möglich ist, folgen die Schritte 442 und 444 wie zuvor beschrieben.

Das Verfahren oder zumindest Teile davon kann/können ebenfalls Computerimplementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Weitere Ausführungsbeispiele der vorliegenden Erfindung beziehen sich auf die folgenden Gegenstände:
Ein System 100 für ein Nutzfahrzeug (oder eine Fahrzeugkombination) 10, das zumindest teilweise in einem Bereich operiert wird, wo die Zufahrt 21 und Ausfahrt 22 kontrolliert werden, um von einer Zufahrt des Bereiches zumindest zu einem vorbestimmten Zielpunkt zu gelangen, wo eine vorbestimmte Handlung an dem Fahrzeug 10 oder der Fahrzeugkombination ausgeführt wird. Weiterhin wird diese Position verlassen und die Ausfahrt des Bereiches angesteuert. Dieses System ist dadurch gekennzeichnet, dass die Handlung an dem Fahrzeug oder der Fahrzeugkombination 10 innerhalb des Bereiches autonom durchgeführt wird, ohne dass der Fahrer sich in dem Fahrzeug oder der Fahrzeugkombination 10 befindet.

Die vorliegende Erfindung bezieht sich auch auf ein System, wo die Verantwortung über das Fahrzeug von dem Fahrer auf ein Managementsystem des Bereiches übergegeben wird.

Weitere Ausführungsbeispiele beziehen sich auf ein System 100, wo die vorbestimmte Handlung eine beliebige Handlung umfasst, die in einer Änderung von zumindest einer Fahrzeugeigenschaft resultiert.

Weitere Ausführungsbeispiele beziehen sich auf ein System 100, wo die Fahrzeugeigenschaft ein Energiespeicherniveau, ein Ladeniveau, eine Fahrzeugkopplung oder -entkopplung, eine globale Position des Fahrzeuges 10, eine Verschmutzung an der äußeren Oberfläche oder einen Wartungszustand in Bezug auf eine Zusatzkomponente des Fahrzeuges oder der Fahrzeugkombination selbst bezieht.

Weitere Ausführungsbeispiele beziehen sich auf ein System 100, wo zwischen dem Verlassen der Einfahrt 21 und dem Erreichen der Ausfahrt 22 eine beliebige Anzahl von Zielpunkten definiert sein können, die durch das Nutzfahrzeug 10 angesteuert werden, mit oder ohne dass spezifische Handlungen dort auszuführen wären.

Weitere Ausführungsbeispiele beziehen sich auf ein System 100, wo der Pfad 200 des Fahrzeuges oder der Fahrzeugkombination 10 zwischen der Einfahrt 21 und der Ausfahrt 22 Punkte innerhalb des Bereiches umfasst, die anzufahren sind und durch den Verantwortlichen des Bereiches bestimmt werden oder durch das Fahrzeug 10 basierend auf Informationen ermittelt werden, die durch den Verantwortlichen des Bereiches bereitgestellt werden oder auf Daten von zuvor durchgeführten manuellen Operationen durch den Fahrer des Fahrzeuges 10 oder eines Fahrers eines anderen Fahrzeuges 10 basieren.

Optional kann der Verantwortliche des Bereichs die anzufahrenden Punkte definieren und Orientierung des Nutzfahrzeuges bei der Anfahrt festlegen.

Optional hat das System Schnittstellen zu dem Fahrer, Fahrzeugsensoren, zu Fahrzeugaktuatoren und zu dem Verantwortlichen des Bereichs. Die Schnittstellen können Teil eines mobilen Geräts sein, oder eine Anzeige oder Eingabemittel aufweisen.

### BEZUGSZEICHENLISTE

- 10: Nutzfahrzeug/Fahrzeugkombination
- 12: Sensoreinheit
- 14: Fahrzeugaktuatoren
- 16: Kommunikationsmodul
- 21: Einfahrt
- 22: Ausfahrt
- 100: System
- 110: Übergabemodul
- 120: Bewegungsmodul
- 130: Durchführungsmodul
- 201, 202: vorbestimmte Zielpunkte
- 203: Umkehrpunkt
- 204: Beladepunkt
- 205: Parkposition
- 207: Betreiber/Managementsystem
- 340: beispielhafter Gabelstapler
- 350: potenzieller Schnittpunkt
- 345: Pfad des Gabelstaplers

## Patentansprüche

1. System (100) zum Operieren eines fahrerlosen Nutzfahrzeugs (10) in einem eingeschränkten Bereich, wobei der eingeschränkte Bereich eine Einfahrt (21), eine Ausfahrt (22) und einen vorbestimmten Zielpunkt (201) aufweist, wobei das Nutzfahrzeug (10) eine Sensoreinheit (12) und Fahrzeugaktuatoren (14) zum Operieren des Nutzfahrzeuges aufweist und die Sensoreinheit (12) Umgebungssensoren aufweist, wobei das System (100)
- ein Übergabemodul (110) zum Übergeben der Kontrolle über das Nutzfahrzeug (10) an der Einfahrt (21): von dem Fahrer des Nutzfahrzeuges (10) an das System (100), und an der Ausfahrt (22): von dem System (100) an den Fahrer des Nutzfahrzeuges (10);
- ein Bewegungsmodul (120) zum autonomen Bewegen des Nutzfahrzeuges (10) von der Einfahrt (21) zu dem vorbestimmten Zielpunkt (201) und von dem vorbestimmten Zielpunkt (201) zu der Ausfahrt (22); und
- ein Durchführungsmodul (130) zum autonomen Durchführen einer Handlung an dem Nutzfahrzeug (10), während das Nutzfahrzeug (10) sich an dem vorbestimmten Zielpunkt (201) befindet, um einen Zustand des Nutzfahrzeuges (10) durch die Handlung zu ändern, umfasst,
**dadurch gekennzeichnet, dass**
das System (100) in einem Steuergerät des Nutzfahrzeugs (10) installiert ist,
das Bewegungsmodul (120) ausgebildet ist, um Sensordaten von der Sensoreinheit (12) zu erhalten und um die Fahrzeugaktuatoren (14) basierend auf den Sensordaten anzusteuern, um das Nutzfahrzeug autonom zu operieren,
das Bewegungsmodul (120) ausgebildet ist, um Hindernisse während des autonomen Bewegens unter Nutzung der Umgebungssensoren zu erkennen und basierend darauf einen Bewegungspfad (200) von der Einfahrt (21) zu dem vorbestimmten Zielpunkt (201) oder von dem vorbestimmten Zielpunkt (201) zu der Ausfahrt (22) zu ändern, um einen Alternativpfad zu nutzen oder eine Bewegung zu unterbrechen,
**und** dadurch dass das System (100) weiterhin ein Hilfemodul aufweist, welches ausgebildet ist, um Unterstützung bei einem Bediener des Systems (100) anzufragen, wenn das Bewegungsmodul (120) nicht in der Lage ist, einen alternativen Pfad oder eine Unterbrechung der Bewegung durchzuführen.

2. System (100) nach Anspruch 1, wobei das Durchführungsmodul (130) ausgebildet ist, um die Handlung autonom durchzuführen, ohne eine Interaktion mit dem Fahrer des Nutzfahrzeuges (10) oder einer anderen Person.

3. System (100) nach Anspruch 1 oder Anspruch 2, wobei das Durchführungsmodul (130) ausgebildet ist, um durch die Handlung zumindest einen der folgenden Zustände des Nutzfahrzeuges (10) zu ändern: einen Energieladezustand, einen Beladungszustand, ein Koppeln oder Entkoppeln von Fahrzeugteilen, eine globale Position des Fahrzeuges (10), eine Verschmutzung der äußeren Oberfläche des Fahrzeuges (10), einen Servicezustand des Fahrzeuges (10) oder einer seiner Komponenten.

4. System (100) nach einem der vorhergehenden Ansprüche, wobei das Bewegungsmodul (120) und/oder das Durchführungsmodul (130) ausgebildet sind, das Nutzfahrzeug (10) autonom zu bewegen und die Handlung nur dann autonom durchzuführen, wenn der Fahrer das Nutzfahrzeug (10) verlassen hat.

5. System (100) nach einem der Ansprüche 1 bis 4, wobei die Sensoreinheit (12) einen Positionssensor und einen Sensor zur Bestimmung der Orientierung des Nutzfahrzeuges (10) umfasst, wobei das Bewegungsmodul (120) ausgebildet ist, um das Nutzfahrzeug (10) an dem vorbestimmten Zielpunkt mit einer definierten Orientierung zu parken.

6. System (100) nach einem der vorhergehenden Ansprüche, wobei der eingeschränkte Bereich durch ein Managementsystem steuerbar ist und das Managementsystem ausgebildet ist, um eine Planung von Pfaden von Fahrzeugen in dem eingeschränkten Bereich durchzuführen, wobei das System (100) eine Kommunikationsschnittstelle aufweist, die ausgebildet ist, um eine Verbindung zu dem Managementsystem des eingeschränkten Bereiches herzustellen, um Daten für einen geplanten Pfad (200) in dem eingeschränkten Bereich zu erhalten.

7. System (100) nach Anspruch 6, wobei entlang des geplanten Pfades (200) weitere Zielpunkte liegen, wobei das Bewegungsmodul (120) ausgebildet ist, um das Nutzfahrzeug (10) autonom zu den weiteren Zielpunkten (202) innerhalb des eingeschränkten Bereiches entlang des geplanten Pfades (200) zu bewegen, um an den weiteren Zielpunkten (202) weitere Handlungen auszuführen oder zweitweise das Nutzfahrzeug zu parken; und die Kommunikationsschnittstelle ausgebildet ist, um Informationen über Handlungen an den weiteren Zielpunkten zu erhalten.

8. System (100) nach einem der vorhergehenden Ansprüchen, wobei das Bewegungsmodul (120) weiter ausgebildet ist, um Zielpunkte für das Nutzfahrzeug (10) basierend auf Informationen zu ermitteln, die von Handlungen abhängen, die der Fahrer des Nutzfahrzeuges (10) oder die ein Fahrer von anderen Fahrzeugen zuvor durchgeführt hatten.

9. System (100) nach einem der vorhergehenden Ansprüche, wobei das System (100) ein Hinweisemodul aufweist, welches ausgebildet ist, um die autonom ausgeführten Handlungen in dem eingeschränkten Bereich zu visualisieren und/oder akustisch anzuzeigen, sodass eine Umgebung des Nutzfahrzeuges (10) Hinweise über die autonom ausgeführten Handlungen erhält.

10. Managementsystem, das
- eine Kommunikationsschnitte, die ausgebildet ist, um eine Kommunikationsverbindung mit einem System (100) nach einem der Ansprüche 1 bis 9 herzustellen; und
- eine Steuereinheit, die ausgebildet ist, um eine Planung und Koordinierung von einem autonom fahrenden Nutzfahrzeug (10) in dem eingeschränkten Bereich durchzuführen, aufweist.

11. Verfahren zum Operieren eines fahrerlosen Nutzfahrzeugs (10) in einem eingeschränkten Bereich, wobei der eingeschränkte Bereich eine Einfahrt (21), eine Ausfahrt (22) und einen vorbestimmten Zielpunkt (201) aufweist, wobei das Nutzfahrzeug (10) eine Sensoreinheit (12) und Fahrzeugaktuatoren (14) zum Operieren des Nutzfahrzeuges aufweist und die Sensoreinheit (12) Umgebungssensoren aufweist, das Verfahren umfasst die Schritte:
- Übergeben (S110) der Kontrolle über das Nutzfahrzeug (10) an der Einfahrt (21) von dem Fahrer des Nutzfahrzeuges (10) an das System und an der Ausfahrt (22) von dem System (100) an den Fahrer des Nutzfahrzeuges (10);
- autonomes Bewegen (S120) des Nutzfahrzeuges (10) von der Einfahrt (21) zu dem vorbestimmten Zielpunkt (201) und von dem vorbestimmten Zielpunkt (201) zu der Ausfahrt (22);
- autonomes Durchführen (S130) einer Handlung an dem Nutzfahrzeug (10), während das Nutzfahrzeug (10) sich an dem vorbestimmten Zielpunkt (201) befindet, um einen Zustand des Nutzfahrzeuges (10) durch die Handlung zu ändern,
**gekennzeichnet durch**
Erhalten von Sensordaten von der Sensoreinheit (12) und Ansteuern der Fahrzeugaktuatoren (14) basierend auf den Sensordaten, um das Nutzfahrzeug autonom zu operieren,
Erkennen von Hindernissen während des autonomen Bewegens unter Nutzung der Umgebungssensoren und basierend darauf Ändern eines Bewegungspfades (200) von der Einfahrt (21) zu dem vorbestimmten Zielpunkt (201) oder von dem vorbestimmten Zielpunkt (201) zu der Ausfahrt (22), um einen Alternativpfad zu nutzen oder eine Bewegung zu unterbrechen,
Anfragen, durch ein Hilfemodul, von Unterstützung bei einem Bediener des Systems (100), wenn es unmöglich ist, einen alternativen Pfad oder eine Unterbrechung der Bewegung durchzuführen
wobei das Verfahren durch ein Steuergerät in dem Nutzfahrzeug (10) ausgeführt wird.

12. Computerprogrammprodukt mit darauf gespeicherter Software, die ausgebildet ist, um das Verfahren nach Anspruch 11 auszuführen, wenn die Software auf einer Datenverarbeitungseinheit ausgeführt wird.

## Claims

1. System (100) for operating a driverless utility vehicle (10) in a restricted area, wherein the restricted area has an entrance (21), an exit (22) and a predetermined target point (201), wherein the utility vehicle (10) has a sensor unit (12) and vehicle actuators (14) for operating the utility vehicle and the sensor unit (12) has surroundings sensors, wherein the system (100) comprises
- a transfer module (110) for transferring control of the utility vehicle (10) at the entrance (21) from the driver of the utility vehicle (10) to the system (100), and at the exit (22) from the system (100) to the driver of the utility vehicle (10),
- a movement module (120) for moving the utility vehicle (10) from the entrance (21) to the predetermined target point (201) and from the predetermined target point (201) to the exit (22) autonomously, and
- a performance module (130) for performing an action on the utility vehicle (10) autonomously while the utility vehicle (10) is situated at the predetermined target point (201), so as to change a state of the utility vehicle (10) by way of the action,
**characterized in that**
the system (100) is installed inside a controller of the utility vehicle (10), the movement module (120) is designed to obtain sensor data from the sensor unit (12) and to drive the vehicle actuators (14) on the basis of the sensor data in order to operate the utility vehicle autonomously,
the movement module (120) is designed to recognize obstacles during the autonomous movement using the surroundings sensors and, on the basis of this, to change a movement path (200) from the entrance (21) to the predetermined target point (201) or from the predetermined target point (201) to the exit (22), to use an alternative path or to interrupt a movement,
**and in that** the system (100) also has an assistance module, which is designed to request support from an operator of the system (100) when the movement module (120) is not able to take an alternative path or interrupt the movement.

2. System (100) according to claim 1,
wherein the performance module (130) is designed to perform the action autonomously without interaction with the driver of the utility vehicle (10) or another individual.

3. System (100) according to claim 1 or claim 2,
wherein the performance module (130) is designed to change at least one of the following states of the utility vehicle (10) by way of the action: an energy charge state, a loading state, coupling or decoupling of vehicle parts, a global position of the vehicle (10), soiling of the outer surface of the vehicle (10), a service state of the vehicle (10) or of one of its components.

4. System (100) according to any of the preceding claims,
wherein the movement module (120) and/or the performance module (130) is/are designed to move the utility vehicle (10) autonomously and to perform the action autonomously only when the driver has left the utility vehicle (10).

5. System (100) according to any one of claims 1 to 4, wherein the sensor unit (12) comprises a position sensor and a sensor for determining the orientation of the utility vehicle (10),
wherein the movement module (120) is designed to park the utility vehicle (10) at the predetermined target point with a defined orientation.

6. System (100) according to any of the preceding claims, wherein the restricted area can be controlled by a management system and the management system is designed to plan paths for vehicles in the restricted area,
wherein the system (100) has a communication interface,
which is designed to produce a connection with the management system of the restricted area so as to obtain data for a planned path (200) in the restricted area.

7. System (100) according to claim 6, wherein further target points lie along the planned path (200),
wherein the movement module (120) is designed to move the utility vehicle (10) autonomously along the planned path (200) to the further target points (202) within the restricted area, so as to execute further actions at the further target points (202) or to temporarily park the utility vehicle, and the communication interface is designed to obtain information about actions at the further target points.

8. System (100) according to any of the preceding claims,
wherein the movement module (120) is furthermore designed to determine target points for the utility vehicle (10) on the basis of information depending on actions that the driver of the utility vehicle (10) or that a driver of other vehicles have performed previously.

9. System (100) according to any of the preceding claims,
wherein the system (100) has an information module,
which is designed to show and/or acoustically indicate the autonomously executed actions in the restricted area, such that surroundings of the utility vehicle (10) obtain information regarding the autonomously executed actions.

10. Management system,
which has
- a communication interface, which is designed to produce a communication connection with a system (100) according to any one of claims 1 to 9, and
- a control unit, which is designed to perform planning and coordination for a self-driving utility vehicle (10) in the restricted area.

11. Method for operating a driverless utility vehicle (10) in a restricted area, wherein the restricted area has an entrance (21), an exit (22) and a predetermined target point (201), wherein the utility vehicle (10) has a sensor unit (12) and vehicle actuators (14) for operating the utility vehicle and the sensor unit (12) has surroundings sensors, the method comprises the steps of:
- transferring (S110) control of the utility vehicle (10) at the entrance (21) from the driver of the utility vehicle (10) to the system, and at the exit (22) from the system (100) to the driver of the utility vehicle (10),
- autonomously moving (S120) the utility vehicle (10) from the entrance (21) to the predetermined target point (201) and from the predetermined target point (201) to the exit (22),
- autonomously performing (S130) an action on the utility vehicle (10) while the utility vehicle (10) is situated at the predetermined target point (201), so as to change a state of the utility vehicle (10) by way of the action,
**characterized by**
obtaining sensor data from the sensor unit (12) and driving the vehicle actuators (14) on the basis of the sensor data in order to operate the utility vehicle autonomously,
recognizing obstacles during the autonomous movement using the surroundings sensors and, on the basis of this, changing a movement path (200) from the entrance (21) to the predetermined target point (201) or from the predetermined target point (201) to the exit (22), using an alternative path or interrupting a movement,
Requesting support from an operator of the system (100), by means of an assistance module when it is not possible to take an alternative path or interrupt the movement
wherein the method is implemented by a controller in the utility vehicle (10).

12. Computer program product with software stored thereon, which is configured to implement the method according to claim 14 when the software is running on a data processing unit.

## Revendications

1. Système (100) pour faire fonctionner un véhicule utilitaire sans conducteur (10) dans une zone restreinte, dans lequel la zone restreinte présente une entrée (21), une sortie (22) et un point cible prédéterminé (201), dans lequel le véhicule utilitaire (10) présente une unité de capteur (12) et des actionneurs de véhicule (14) pour faire fonctionner le véhicule utilitaire, et l'unité de capteur (12) présente des capteurs d'environnement, dans lequel le système (100) comprend
- un module de transfert (110) pour transférer le contrôle du véhicule utilitaire (10) à l'entrée (21) : du conducteur du véhicule utilitaire (10) au système (100), et à la sortie (22) : du système (100) au conducteur du véhicule utilitaire (10) ;
- un module de déplacement (120) pour déplacer de manière autonome le véhicule utilitaire (10) de l'entrée (21) vers le point cible prédéterminé (201) et du point cible prédéterminé (201) vers la sortie (22) ; et
- un module d'exécution (130) pour exécuter de manière autonome une action sur le véhicule utilitaire (10) pendant que le véhicule utilitaire (10) se trouve au point cible prédéterminé (201) afin de modifier un état du véhicule utilitaire (10) par l'action,
**caractérisé en ce que**
le système (100) est installé dans un appareil de commande du véhicule utilitaire (10), le module de déplacement (120) est conçu pour recevoir des données de capteur de l'unité de capteur (12) et pour commander les actionneurs de véhicule (14) sur la base des données de capteur afin de faire fonctionner le véhicule utilitaire de manière autonome,
le module de déplacement (120) est conçu pour détecter des obstacles pendant le déplacement autonome en utilisant les capteurs d'environnement et, sur la base de ceux-ci, changer un trajet de déplacement (200) de l'entrée (21) vers le point cible prédéterminé (201) ou du point cible prédéterminé (201) vers la sortie (22) afin d'utiliser un trajet alternatif ou interrompre un déplacement,
**et en ce que** le système (100) présente en outre un module d'aide qui est conçu pour demander une assistance à un opérateur du système (100) lorsque le module de déplacement (120) n'est pas en mesure d'exécuter un trajet alternatif ou une interruption du déplacement.

2. Système (100) selon la revendication 1,
dans lequel le module d'exécution (130) est conçu pour exécuter l'action de manière autonome, sans interaction avec le conducteur du véhicule utilitaire (10) ou une autre personne.

3. Système (100) selon la revendication 1 ou la revendication 2,
dans lequel le module d'exécution (130) est conçu pour modifier par l'action au moins l'un des états suivants du véhicule utilitaire (10) : un état de charge en énergie, un état de charge, un couplage ou un découplage de parties de véhicule, une position globale du véhicule (10), un encrassement de la surface extérieure du véhicule (10), un état de service du véhicule (10) ou d'un de ses composants.

4. Système (100) selon l'une quelconque des revendications précédentes,
dans lequel le module de déplacement (120) et/ou le module d'exécution (130) sont conçus pour déplacer le véhicule utilitaire (10) de manière autonome et pour exécuter l'action de manière autonome uniquement lorsque le conducteur a quitté le véhicule utilitaire (10).

5. Système (100) selon l'une quelconque des revendications 1 à 4, dans lequel l'unité de capteur (12) comprend un capteur de position et un capteur pour déterminer l'orientation du véhicule utilitaire (10),
dans lequel le module de déplacement (120) est conçu pour garer le véhicule utilitaire (10) au point cible prédéterminé avec une orientation définie.

6. Système (100) selon l'une quelconque des revendications précédentes, dans lequel la zone restreinte peut être commandée par un système de gestion, et le système de gestion est conçu pour exécuter une planification de trajets de véhicules dans la zone restreinte,
dans lequel le système (100) présente une interface de communication
qui est conçue pour établir une connexion avec le système de gestion de la zone restreinte afin d'obtenir des données pour un trajet planifié (200) dans la zone restreinte.

7. Système (100) selon la revendication 6, dans lequel des points cibles supplémentaires se situent le long du trajet planifié (200),
dans lequel le module de déplacement (120) est conçu pour déplacer de manière autonome le véhicule utilitaire (10) vers les points cibles supplémentaires (202) à l'intérieur de la zone restreinte le long du trajet planifié (200) afin d'exécuter des actions supplémentaires au niveau des points cibles supplémentaires (202) ou de garer temporairement le véhicule utilitaire ; et l'interface de communication est conçue pour recevoir des informations sur les actions aux points cibles supplémentaires.

8. Système (100) selon l'une quelconque des revendications précédentes,
dans lequel le module de déplacement (120) est en outre conçu pour déterminer des points cibles pour le véhicule utilitaire (10) sur la base d'informations qui dépendent d'actions que le conducteur du véhicule utilitaire (10) ou un conducteur d'autres véhicules a exécutées auparavant.

9. Système (100) selon l'une quelconque des revendications précédentes,
dans lequel le système (100) présente un module d'information qui est conçu pour visualiser et/ou indiquer acoustiquement les actions exécutées de manière autonome dans la zone restreinte, de sorte qu'un environnement du véhicule utilitaire (10) reçoive des informations sur les actions exécutées de manière autonome.

10. Système de gestion qui présente
- une interface de communication qui est conçue pour établir une connexion de communication avec un système (100) selon l'une quelconque des revendications 1 à 9 ; et
- un dispositif de commande qui est conçu pour exécuter une planification et une coordination d'un véhicule utilitaire autonome (10) dans la zone restreinte.

11. Procédé pour faire fonctionner un véhicule utilitaire sans conducteur (10) dans une zone restreinte, dans lequel la zone restreinte présente une entrée (21), une sortie (22) et un point cible prédéterminé (201), dans lequel le véhicule utilitaire (10) présente une unité de capteur (12) et des actionneurs de véhicule (14) pour faire fonctionner le véhicule utilitaire, et l'unité de capteur (12) présente des capteurs d'environnement, le procédé comprend les étapes de :
- transfert (S110) du contrôle du véhicule utilitaire (10) à l'entrée (21) : du conducteur du véhicule utilitaire (10) au système (100), et à la sortie (22) : du système au conducteur du véhicule utilitaire (10) ;
- déplacement autonome (S120) du véhicule utilitaire (10) de l'entrée (21) vers le point cible prédéterminé (201) et du point cible prédéterminé (201) vers la sortie (22) ;
- exécution autonome (S130) d'une action sur le véhicule utilitaire (10) pendant que le véhicule utilitaire (10) se trouve au point cible prédéterminé (201) afin de modifier un état du véhicule utilitaire (10) par l'action,
**caractérisé par**
la réception de données de capteur en provenance de l'unité de capteur (12) et la commande des actionneurs de véhicule (14) sur la base des données de capteur afin de faire fonctionner le véhicule utilitaire de manière autonome,
la détection d'obstacles pendant le déplacement autonome en utilisant les capteurs d'environnement et, sur la base de ceux-ci, la modification d'un trajet de déplacement (200) de l'entrée (21) vers le point cible prédéterminé (201) ou du point cible prédéterminé (201) vers la sortie (22) afin d'utiliser un trajet alternatif ou interrompre un déplacement,
la demande, par un module d'aide, d'une assistance à un opérateur du système (100) lorsqu'il est impossible d'exécuter un trajet alternatif ou d'interrompre le déplacement,
dans lequel le procédé est mis en œuvre par un appareil de commande dans le véhicule utilitaire (10).

12. Produit de programme informatique sur lequel un logiciel est stocké, qui est conçu pour mettre en œuvre le procédé selon la revendication 11 lorsque le logiciel est exécuté sur une unité de traitement de données.
